(19) Europäisches Patentamt
European Patent Office
Office européen des brevets

(11) EP 2 549 670 B1

(12) FASCICULE DE BREVET EUROPEEN

(45) Date de publication et mention
de la délivrance du brevet:
**21.01.2015 Bulletin 2015/04**

(51) Int Cl.:
*H04L 1/00* (2006.01)  *H04L 1/18* (2006.01)
*H04W 52/34* (2009.01)  *H04W 52/20* (2009.01)
*H04W 52/48* (2009.01)

(21) Numéro de dépôt: **12176814.7**

(22) Date de dépôt: **18.07.2012**

(54) **Procédé de transmission de paquets de données dans un système de télécommunication à adaptation de lien selon un protocole harq pour optimiser la puissance d'émission**

Übertragungsverfahren von Datenpaketen in einem Funksystem mit Verbindungsanpassung nach einem HARQ-Protokoll zur Optimierung der Sendeleistung

Method for transmitting data packets in a telecommunication system with link adaptation according to a HARQ protocol in order to optimise the transmission power

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2011 FR 1156587**

(43) Date de publication de la demande:
**23.01.2013 Bulletin 2013/04**

(73) Titulaire: **COMMISSARIAT A L'ENERGIE ATOMIQUE ET AUX ENERGIES ALTERNATIVES 75015 Paris (FR)**

(72) Inventeurs:
• **Calvanese Strinati, Emilio**
  **38000 Grenoble (FR)**
• **Gupta, Rohit**
  **38000 Grenoble (FR)**

(74) Mandataire: **Regimbeau**
  **20, rue de Chazelles**
  **75847 Paris Cedex 17 (FR)**

(56) Documents cités:
**EP-A1- 1 924 018**     **WO-A1-02/17548**
**WO-A1-2004/025870**

**Description**

DOMAINE TECHNIQUE GENERAL

L'invention concerne le domaine des systèmes de télécommunication sans fil et plus particulièrement celui des systèmes de télécommunication à adaptation de lien.

ETAT DE LA TECHNIQUE

Dans un système de télécommunication sans fil, la qualité du signal reçu par un terminal dépend de plusieurs facteurs. Pour maximiser le débit de transmission et la capacité globale du système, les caractéristiques du signal à transmettre peuvent être modifiées pour tenir compte des variations de la qualité du canal de transmission. Ce mécanisme de modification est connu sous la dénomination d'adaptation de lien (en anglais, « *Link Adaptation* »).
Un exemple d'adaption de lien est donné dans le document EP 1 924 018.
Un moyen bien connu pour adapter un lien dans un système de télécommunication sans fil est d'utiliser une modulation et un codage adaptatifs ou AMC (en anglais, « *Adaptive Modulation and Coding* ») autrement dit de sélectionner un schéma de codage et de modulation, MCS (en anglais, « *Modulation and Coding Scheme* ») en fonction de la qualité du canal. Ce moyen est notamment mis en oeuvre dans la couche physique des systèmes 3GPP HSxPA et ETSI HIPERLAN/2.
Typiquement, pour un faible rapport signal à bruit sur le canal de transmission, on opte pour un code à faible rendement (c'est-à-dire à taux de redondance élevé) et/ou à faible degré de modulation (c'est-à-dire une constellation de faible taille). A l'inverse, si le canal de transmission présente un rapport signal à bruit élevé, le débit est maximisé en choisissant un code à fort rendement et un degré de modulation élevé. Le rapport signal à bruit SNR (en anglais, « *Signal to Noise Ratio* ») ou signal à interférence plus bruit, SINR (en anglais, « *Signal to Interference plus Noise Ratio* ») est généralement estimé par le récepteur à l'aide de symboles pilote et d'une estimation des coefficients de propagation du canal. On pourra se référer par exemple au document A.J. Goldsmith and S. Chua, « Adaptive coded modulation for fading channels », in IEEE Trans. On Communications, 1998.
Pour combattre les évanouissements (en anglais, « *channel fading* ») sur le canal de transmission, il est connu de recourir à un mécanisme de requête de retransmission hybride ou HARQ (en anglais « *Hybrid Automatic Repeat reQuest* ») : si le récepteur reçoit un paquet erroné, un accusé de réception négatif NACK (en anglais, « *Negative acknowledgement* ») est retourné à l'émetteur et le paquet est retransmis. Il existe différents types de protocole HARQ, selon notamment que le paquet est retransmis à l'identique ou que des bits de parité supplémentaires sont seulement transmis (redondance incrémentale).
Le schéma d'adaptation AMC au niveau de la couche physique peut être combiné avec le mécanisme HARQ au niveau de la couche de liaison (en anglais, « *data link layer* »). On parle alors de mécanisme d'adaptation inter-couche (en anglais, « *cross-layer design* »). Dans un tel cas, une première adaptation est effectuée au niveau de la couche physique grâce au choix du schéma MCS en fonction du SINR mesuré par le récepteur pour atteindre un taux d'erreur paquet cible donné. Une seconde adaptation, plus fine, est réalisée au niveau de la couche de liaison par l'envoi de requêtes de retransmission. L'architecture inter-couche permet de réduire le nombre de schémas MCS du mécanisme d'adaptation AMC. On trouvera un exemple d'adaptation inter-couche dans le document E. Calvanese Strinati et al. : « Performance evaluation of some hybrid ARQ schemes in IEEE 802.11a » networks publié dans Proceedings of the IEEE Vehicular Technology Conference, Spring, vol. 4, pages 2735-2739, avril 2003.
Un problème avec un mécanise de ce type est qu'il est couteux en terme de puissance d'émission puisqu'aucune adaptation de ce paramètre n'est effectuée.

PRESENTATION DE L'INVENTION

L'invention permet de pallier les inconvénients précités en proposant d'optimiser la puissance d'émission dans un mécanise d'adaptation inter-couche.
Elle propose selon un premier aspect un procédé de transmission d'un paquet de données dans un système de communication comprenant au moins un terminal en communication avec une station de base (BS), le procédé comprenant au moins une transmission du paquet de données avec une puissance donnée, du terminal vers la station de base selon un schéma HARQ pour obtenir un taux d'erreur paquet résiduel $PER_{res}$ après un nombre de transmission $Tr_n$.
Le procédé de l'invention est **caractérisé en ce qu'**il comprend une étape de sélection conjointe des paramètres suivants :

- du nombre de transmission $Tr_n$ ;

- du taux d'erreur paquet cible $PER_{tg}(i)$ de chaque transmission $i$, avec $i = 1,...,Tr_n$, pour atteindre le taux d'erreur paquet résiduel $PER_{res}$; et
- du schéma de modulation et de codage $m$ correspondant à chaque taux d'erreur paquet cible $PER_{tg}(i)$ de manière à minimiser la puissance de transmission du paquet de données.

En outre, le procédé de l'invention peut comprendre une ou plusieurs des caractéristiques suivantes :

- le paquet de données est transmis sur une ressource de transmission et dans lequel la sélection du schéma de modulation et de codage $m$ correspondant à chaque taux d'erreur paquet cible $PER_{tg}(i)$ est telle que le rapport signal sur interférence plus bruit $SINR^m(i) \leq P^m(i).\gamma$ avec $P^m(i)$ la puissance d'émission nécessaire à la transmission $i$ et $\gamma$ un indicateur de la qualité du canal de propagation ;
- deux paquets issus de deux transmissions $i, i+1$ successives sont combinés et dans lequel la sélection du schéma de modulation et de codage $m$ correspondant à chaque taux d'erreur paquet cible $PER_{tg}(i)$ est telle que le rapport signal sur interférence plus bruit et la puissance $P^m(i)$ d'émission nécessaire à la transmission $i$ sont liés par la relation suivante $\sum_{j=1}^{i} P^m(j)\gamma \geq SINR^m(i)$ avec $\gamma$ un indicateur de la qualité du canal de propagation ;
- le nombre de transmission $Tr_n > 2$, le procédé comprenant une étape de détermination de l'indicateur de la qualité du canal de transmission avant chaque transmission $i > 1$ et une étape de mise à jour du nombre de transmission $Tr_n$ ; du taux d'erreur paquet cible $PER_{tg}(i)$ de chaque transmission $i$, avec $i = 2,...,Tr_n$, pour atteindre le taux d'erreur paquet résiduel $PER_{res}$ ; et du schéma de modulation et de codage $m$ correspondant à chaque taux d'erreur paquet cible $PER_{tg}(i)$ ;
- le taux d'erreur paquet cible de la transmission $i = 1$ 1 est supérieur au taux d'erreur paquet cible de la transmission $i > 1$ ;
- l'indicateur de la qualité du canal de propagation est le rapport signal sur interférence plus bruit normalisé correspondant à une transmission de symboles pilotes sur la ressource de transmission.
- le taux d'erreur paquet cible $PER_{tg} = [PER_{tg}(1), ..., PER_{tg}(i),..., PER_{tg}(Tr_n)]$ vérifie la contrainte suivante : $PER_{tg}(i) > PER_{tg}(i+1)>...> PER_{tg}(Tr_n)$ ;
- le taux d'erreur paquet cible $PER_{tg}(i)$ à chaque transmission $i$ est tel que $PER_{res} \leq \prod_{i=1}^{Tr_n} PER_{tg}(i)$ ;
- le nombre de transmission $Tr_n$ et le taux d'erreur paquet cible $PER_{tg}(i)$ à chaque transmission $i$ minimise la puissance $P_{avg}$ d'émission du paquet de données définie par la fonctionnelle suivante $P_{avg} = \sum_{i=1}^{Tr_n} \left\{ P^m(i)\prod_{k=0}^{i-1} PER_{tg}^m(k) \right\}$ selon un schéma $m$ de modulation et de codage correspondant au taux d'erreur paquet cible $PER_{tg}(i)$ ;
- le taux d'erreur paquet résiduel $PER_{res}$ est inférieur à $10^{-4}$;
- le système de télécommunication est un système OFDM à accès multiple par répartition de fréquences, chaque ressource étant un intervalle de fréquences.

PRESENTATION DES FIGURES

D'autres caractéristiques et avantages de l'invention ressortiront encore de la description qui suit laquelle est purement illustrative et non limitative et doit être lue en regard des dessins annexés sur lesquels

- la figure 1 illustre schématiquement un système de télécommunication conforme à l'invention ;
- la figure 2 illustre schématiquement un mode de réalisation du procédé selon l'invention ;
- la figure 3 illustre des courbes de taux d'erreur paquet en fonction du rapport signal interférence plus bruit ;
- la figure 4 illustre des paramètres de différents schémas de modulation ;
- les figures 5a, 5b, 5c et 5d illustrent schématiquement deux modes de réalisation d'un procédé selon l'invention.

DESCRIPTION DETAILLEE DE L'INVENTION

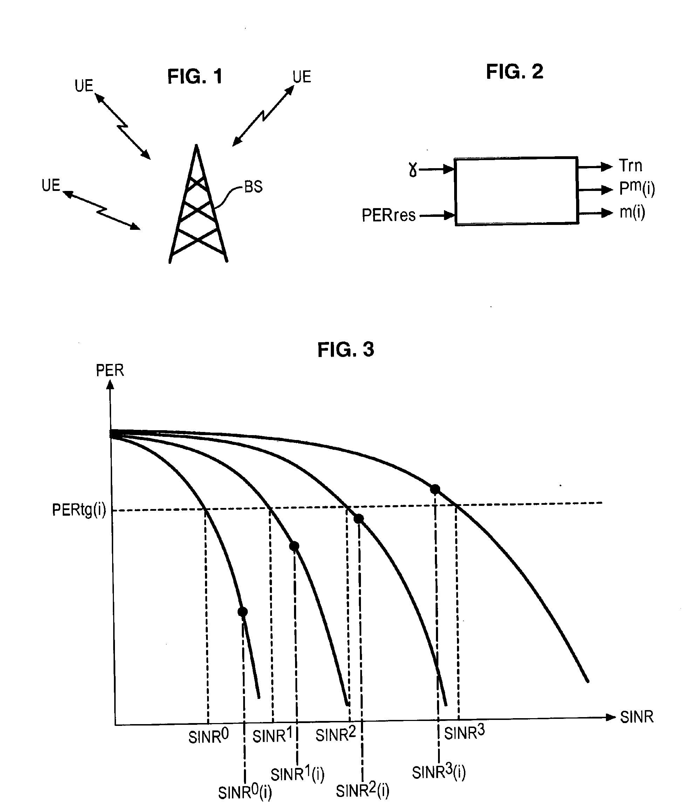

On se place dans un système de télécommunication sans fil à adaptation de lien comprenant au moins un terminal UE en communication avec une station de base BS. La figure 1 illustre schématiquement un tel système.
Chaque terminal UE dispose d'une puissance de transmission donnée pour transmettre un paquet de données sur une ressource de transmission.

Le système de télécommunication est à titre d'exemple un système OFDM (en anglais, « *Orthogonal Frequency Division Multiplexing* »). Chaque terminal UE se voit alloué un ou plusieurs intervalles de fréquences, chaque intervalle étant constitué d'un ensemble de sous-porteuses contiguës (en anglais, « *frequency chunks* ») pendant plusieurs temps-symbole OFDM pour transmettre un paquet de données.

Dans ce cas, la ressource de transmission est un intervalle de fréquences.

Les paramètres du canal de transmission entre un terminal UE et la station de base BS sont supposés connus. Ces informations sont notamment les coefficients du canal pour chaque ressource de transmission et prennent en compte l'atténuation par les trajets multiples.

De tels paramètres sont supposés estimés par des méthodes connues de l'homme du métier et ne seront pas plus détaillées.

On suppose également que l'allocation des ressources de transmission est effectuée au niveau de la station de base BS et notifiée à chaque utilisateur, c'est-à-dire chaque terminal UE. Après cette allocation effectuée chaque terminal va déterminer la puissance nécessaire à l'envoi d'un paquet de données sur la ressource de transmission.

La transmission d'un paquet de données sur la ressource de transmission est effectuée selon un schéma de transmission HARQ.

Selon un tel schéma, une transmission $i = 1$ du paquet peut être suivie par une ou plusieurs retransmission $i = 2,...,Tr_n$ du même paquet de données de manière à ce qu'à l'issue des transmission/retransmission $Tr_n$, le paquet est transmis avec un taux d'erreur paquet inférieur ou égal à un taux d'erreur paquet résiduel $PER_{res}$.

Pour être en dessous du taux d'erreur paquet résiduel $PER_{res}$ les paramètres de chaque transmission/retransmission $i$ du paquet de données sont fixés à partir d'un taux d'erreur paquet cible $PER_{tag}(i)$ pour chaque transmission/retransmission $i$. Le choix du taux d'erreur paquet cible $PER_{tg}(i)$ va conditionner plusieurs paramètres de transmission.

Dans le cas où on considère que chaque transmission/retransmission est un processus aléatoire indépendant on a $PER_{res} \leq \prod_{i=1}^{Tr_n} PER_{tg}(i)$.

Pour chaque taux d'erreur paquet cible $PER_{tg}(i)$, la transmission du paquet de données s'effectue selon un schéma de modulation et de codage $m(i)$.

Le choix du schéma de modulation et de codage $m(i)$ dépend donc d'une part du taux d'erreur paquet cible $PER_{tg}(i)$ et du rapport signal sur interférence plus bruit lié à la puissance d'émission et à la qualité du canal de transmission.

La qualité du canal peut être estimée par le rapport signal sur bruit estimé $\gamma = \dfrac{|H|^2}{\sigma_n^2}.P$ avec $H$ les coefficients du canal de transmission, $\sigma^2$ la puissance du bruit, sur la ressource de transmission utilisé pour la transmission du paquet de données et $P$ la puissance du signal émis.

En fonction de ce paramètre estimé il est possible de déterminer le schéma de modulation et de codage $m(i)$ à partir de courbes de taux d'erreur paquet comme cela est illustré sur la figure 3. Sur cette figure on remarque que pour une valeur de taux d'erreur paquet cible $PER_{tg}$ plusieurs schémas de modulation $m$ sont possibles (correspondant à autant de courbes) pour plusieurs valeurs de SINR minimaux. De telles courbes permettent de déduire le SINR minimal pour atteindre un taux d'erreur paquet cible.

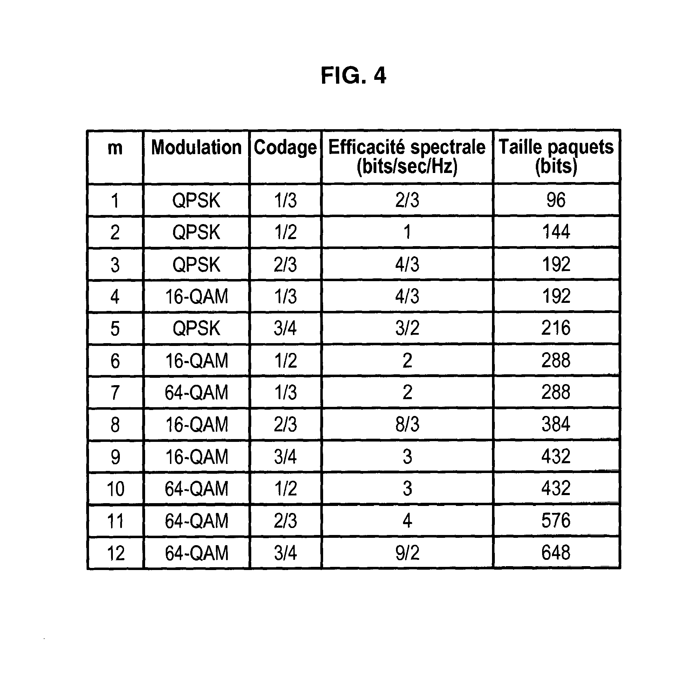

La figure 4 illustre plusieurs paramètres en fonction de l'ordre du schéma de modulation choisi.

La sélection des paramètres de chaque transmission/retransmission $i$ du paquet de données permet de minimiser la puissance nécessaire à la transmission du paquet de données pour obtenir un taux d'erreur paquet résiduel $PER_{res}$ fixé en fonction d'une qualité de service à atteindre (en anglais, « *Quality Of Service* », (QOS)).

Le taux d'erreur paquet résiduel est par exemple fixé à $PER_{res} = 10^{-4}$ pour des systèmes WIFI (en anglais, « *Wireless Fidelity* » 802.11 a/b/e, LTE (en anglais, « *Long Term Evolution* », LTE-A (en anglais, « *Long Term Evolution - Advanced* »), HSDPA (en anglais, « *High Speed Downlink Packet Access* »).

Il s'agit de sélectionner S de manière conjointe les paramètres suivants, de manière à minimiser la puissance de transmission du paquet de données :

- nombre de transmission $Tr_n$ ;
- taux d'erreur paquet cible $PER_{tg}(i)$ de chaque transmission $i$, avec $i = 1,...,Tr_n$, pour atteindre un taux d'erreur paquet inférieur ou égal au taux d'erreur paquet résiduel $PER_{res}$ ; et
- schéma de modulation et de codage $m$ correspondant à chaque taux d'erreur paquet cible $PER_{tg}(i)$.

A la différence d'un schéma de transmission HARQ classique le taux d'erreur paquet cible peut être modifié à chaque transmission/retransmission. La seule contrainte étant d'atteindre le taux d'erreur paquet résiduel $PER_{res}$ à l'issue de la transmission/retransmission du paquet de données.

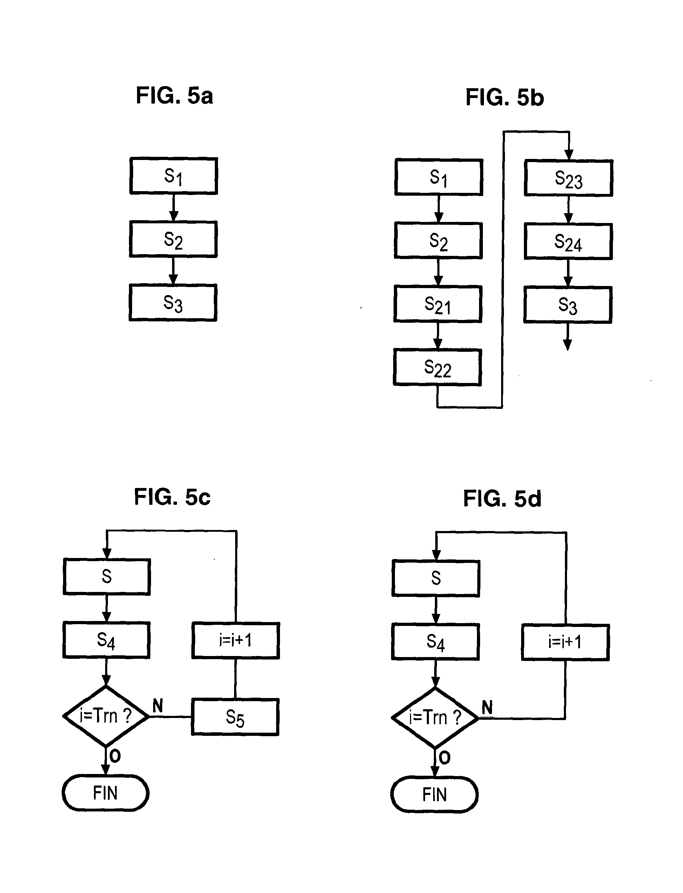

La sélection conjointe S de ces paramètres peut être mise en oeuvre de plusieurs manières. Les figures 5a, 5b, 5c et 5d illustrent schématiquement des étapes du procédé selon différents modes de réalisation.

### 1er mode de réalisation

Selon un premier mode de réalisation on peut fixer un vecteur de taux d'erreur paquet cible tel que le taux d'erreur paquet cible de la transmission $i = 1$ est fort de sorte à choisir un schéma de modulation de codage $m(i)$ d'ordre élevé. On précise que plus l'ordre est élevé plus l'efficacité spectrale est élevée ceci pour une faible puissance nécessaire à

Par exemple, le taux d'erreur paquet cible à chaque transmission peut être $PER_{tg}$ = [0,4 0,2 0,0001 0,00001] pour atteindre un taux d'erreur paquet résiduel $PER_{res}$ < 10$^{-9}$.

Selon ce mode de réalisation, la transmission s'effectue en prenant un grand risque d'erreurs mais en ayant une large efficacité spectrale tout en minimisant la puissance de transmission.

Une variante est de choisir le schéma de modulation et de codage $m(i)$ correspondant à chaque taux d'erreur paquet cible $PER_{tg}(i)$ de manière telle que le rapport signal sur interférence plus bruit $SINR(i) = P^m(i)\gamma$ est minimal avec $P^m(i)$ la puissance d'émission nécessaire à la transmission/retransmission $i$ et $\gamma$.

De cette façon pour atteindre le taux d'erreur paquet cible de chaque transmission/retransmission le schéma de modulation et de codage nécessitant une puissance de transmission faible est choisi.

Une autre variante au premier mode de réalisation est de choisir un fort taux d'erreur paquet cible pour la transmission $i = 1$ de manière à avoir une large efficacité spectrale et de garder identique le taux d'erreur paquet cible pour chaque transmission $i > 1$.

### 2nd mode de réalisation

Selon un second mode de réalisation la sélection des paramètres de transmission peut être effectuées en minimisant la fonctionnelle suivante $P_{avg} = \sum_{i=1}^{Tr_n} \left\{ P^m(i) \prod_{k=0}^{i-1} PER_{tg}^m(k) \right\}$ où $P^m(i)$ est la puissance requise pour la transmission $i$ selon un schéma $m$ de modulation et de codage correspondant au taux d'erreur paquet cible $PER_{tg}(i)$.

Le problème de la minimisation de cette fonctionnelle peut être défini comme suit :

$$\min_{m, Tr_n, P^m(i)} P_{avg}^m \text{ tel que } 1 \le i \le Tr_n \text{ étant donné } P^m(i) \le P_{\max} ,$$

avec $P_{\max}$ la puissance dont dispose le terminal UE pour une transmission/retransmission $i$.

La minimisation de la fonctionnelle ci-dessus peut être effectuée par la succession des étapes suivantes.

Etape S1 : on initialise un vecteur taux d'erreur paquet cible $PER_{tg} = \llcorner PER_1 \ PER_2 \ ... \ PER_\eta \lrcorner$, vecteur de taille $\eta$.

Etape S2 : pour chaque composante du vecteur taux d'erreur paquet cible initialisé à l'étape S1, on détermine le schéma de modulation et de codage $m(i)$ qui conduit au $SINR^m(i) = P^m(i)\gamma$ minimal sachant $PER_{tg}(i)$.

Etape S3 : on choisit la combinaison de $PER_{tg}(i)$ qui conduit à la puissance minimale telle que :

$$PER_{res} \le \prod_{i=1}^{Tr_n} PER_{tg}(i) \text{ et } PER_{tg}(i) > PER_{tg}(i+1) > ... > PER_{tg}(Tr_n).$$

La mise en oeuvre de l'étape S3 signifie de tester toutes les possibilités.

Pour simplifier la minimisation après l'étape S2 on peut mettre en oeuvre les sous-étapes suivantes.

Etape S21 : au cours de cette étape on sélectionne les valeurs de $SINR(i)$ qui satisfont la contrainte suivante :

$$SINR_{tg}^m(i) \le \gamma P_{\max} .$$ De cette façon la complexité du problème de minimisation est réduite.

La dimension du vecteur taux d'erreur paquet cible est significativement réduite.

Etape S22 : une fois le vecteur taux d'erreur paquet cible réduit on met en oeuvre une succession de permutations pour obtenir une matrice dont chaque ligne correspond à un vecteur taux d'erreur paquet cible.

Etape S23 : on supprime alors les lignes qui ne permettent pas d'obtenir la contrainte suivante

$$PER_{res} \le \prod_{i=1}^{Tr_n} PER_{tg}(i).$$

Etape S24 : enfin on supprime les lignes qui ne vérifient pas la contrainte suivante : $PER_{tg}(i) > PER_{tg}(i+1) > \cdots >$

$PER_{tg}(Tr_n)$

Puis on met en oeuvre l'étape S3 qui consiste à choisir le vecteur taux d'erreur paquet cible qui minimise $P_{avg}$.

<u>3<sup>ème</sup> mode de réalisation</u>

Selon un troisième mode de réalisation pour un nombre de transmission $Tr_n > 2$, le procédé peut comprendre à l'issu de chaque transmission S4, une étape de détermination S5 de l'indicateur de la qualité du canal de transmission et une étape de mise à jour du nombre de transmission $Tr_n$ ; du taux d'erreur paquet cible $PER_{tg}(i)$ de chaque transmission $i$, avec $i = 2, ...., Tr_n$, pour atteindre le taux d'erreur paquet résiduel $PER_{res}$ ; et du schéma de modulation et de codage $m$ correspondant à chaque taux d'erreur paquet cible $PER_{tg}(i)$. En d'autres termes après chaque transmission, l'étape de sélection S est remise en oeuvre.

De cette façon les différents paramètres sont mis à jour dynamiquement au cours de la transmission du paquet de données.

**Revendications**

1. Procédé de transmission d'un paquet de données dans un système de communication comprenant au moins un terminal (UE) en communication avec une station de base (BS), le procédé comprenant au moins une transmission (S4) du paquet de données avec une puissance donnée, du terminal vers la station de base selon un schéma HARQ pour obtenir un taux d'erreur paquet résiduel $PER_{res}$ après un nombre de transmission $Tr_n$, le procédé étant **caractérisé en ce qu'**il comprend une étape de sélection (S) conjointe des paramètres suivants :

   - du nombre de transmission $Tr_n$ ;
   - du taux d'erreur paquet cible $PER_{tg}(i)$ de chaque transmission $i$, avec $i = 1,...,Tr_n$, pour atteindre le taux d'erreur paquet résiduel $PER_{res}$ ; et
   - du schéma de modulation et de codage $m$ correspondant à chaque taux d'erreur paquet cible $PER_{tg}(i)$ de manière à minimiser la puissance de transmission du paquet de données.

2. Procédé selon la revendication 1 dans lequel le paquet de données est transmis sur une ressource de transmission et dans lequel la sélection (S) du schéma de modulation et de codage $m$ correspondant à chaque taux d'erreur paquet cible $PER_{tg}(i)$ est telle que le rapport signal sur interférence plus bruit $SINR^m(i) \leq P^m(i).\gamma$ avec $P^m(i)$ la puissance d'émission nécessaire à la transmission $i$ et $\gamma$ un indicateur de la qualité du canal de propagation.

3. Procédé selon la revendication 1 dans lequel deux paquets issus de deux transmissions $i, i+1$ successives sont combinés et dans lequel la sélection (S) du schéma de modulation et de codage $m$ correspondant à chaque taux d'erreur paquet cible $PER_{tg}(i)$ est telle que le rapport signal sur interférence plus bruit et la puissance $P^m(i)$ d'émission nécessaire à la transmission $i$ sont liés par la relation suivante $\sum_{j=1}^{i} P^m(j)\gamma \geq SINR^m(i)$ avec $\gamma$ un indicateur

   de la qualité du canal de propagation.

4. Procédé selon l'une des revendications 2 à 3 dans lequel le nombre de transmission $Tr_n > 2$, le procédé comprenant une étape de détermination (S5) de l'indicateur de la qualité du canal de transmission avant chaque transmission $i > 1$ et une étape de mise à jour du nombre de transmission $Tr_n$ ; du taux d'erreur paquet cible $PER_{tg}(i)$ de chaque transmission $i$, avec $i = 2,...,Tr_n$, pour atteindre le taux d'erreur paquet résiduel $PER_{res}$ ; et du schéma de modulation et de codage $m$ correspondant à chaque taux d'erreur paquet cible $PER_{tg}(i)$.

5. Procédé selon l'une des revendications 1 à 3 dans lequel le taux d'erreur paquet cible de la transmission $i =1$ 1 est supérieur au taux d'erreur paquet cible de la transmission $i > 1$.

6. Procédé selon l'une des revendications 1 à 4 dans lequel l'indicateur de la qualité du canal de propagation est le rapport signal sur interférence plus bruit normalisé correspondant à une transmission de symboles pilotes sur la ressource de transmission.

7. Procédé selon l'une des revendications 1 à 5 dans lequel le taux d'erreur paquet cible $PER_{tg} = [PER_{tg}(1) ... , PER_{tg}(i), ..., PER_{tg}(Tr_n)]$ vérifie la contrainte suivante : $PER_{tg}(i) > PER_{tg}(i+1) > ... > PER_{tg}(Tr_n)$.

8. Procédé selon l'une des revendication 1 à 6 dans lequel le taux d'erreur paquet cible $PER_{tg}(i)$ à chaque transmission $i$ est tel que

$$PER_{res} \leq \prod_{i=1}^{Tr_n} PER_{tg}(i).$$

9. Procédé selon l'une des revendications précédentes dans lequel le nombre de transmission $Tr_n$ et le taux d'erreur paquet cible $PER_{tg}(i)$ à chaque transmission $i$ minimise la puissance $P_{avg}$ d'émission du paquet de données définie par la fonctionnelle suivante $P_{avg} = \sum_{i=1}^{Tr_n} \left\{ P^m(i) \prod_{k=0}^{i-1} PER_{tg}^m(k) \right\}$ selon un schéma $m$ de modulation et de codage correspondant au taux d'erreur paquet cible $PER_{tg}(i)$.

10. Procédé selon l'une des revendications précédentes dans lequel le taux d'erreur paquet résiduel $PER_{res}$ est inférieur à $10^{-4}$.

11. Procédé selon l'une des revendications précédentes dans lequel le système de télécommunication est un système OFDM à accès multiple par répartition de fréquences, chaque ressource étant un intervalle de fréquences.

**Patentansprüche**

1. Verfahren zum Übertragen eines Datenpakets in einem Kommunikationssystem, das mindestens ein Terminal (UE) umfasst, das mit einer Datenstation (BS) kommuniziert, wobei das Verfahren mindestens eine Übertragung (S4) des Datenpakets mit einer bestimmten Leistung von dem Terminal zu der Datenstation hin nach einem HARQ-Schema umfasst, um eine Restpaketfehlerrate $PER_{res}$ nach einer Übertragungsanzahl $Tr_n$ zu erhalten, wobei das Verfahren **dadurch gekennzeichnet ist, dass** es einen Schritt der gemeinsamen Auswahl (S) der folgenden Parameter umfasst:

   - der Übertragungsanzahl $Tr_n$;
   - der Zielpaketfehlerrate $PER_{tg}(i)$ jeder Übertragung $i$, wobei $i = 1, ..., Tr_n$, um die Restpaketfehlerrate $PER_{res}$ zu erreichen; und
   - des Modulations- und Codierungsschemas $m$, das jeder Zielpaketfehlerrate $PER_{tg}(i)$ entspricht, derart, dass die Übertragungsleistung des Datenpakets minimiert wird.

2. Verfahren nach Anspruch 1, bei dem das Datenpaket über eine Übertragungseinrichtung übertragen wird und bei dem die Auswahl (S) des Modulations- und Codierungsschemas $m$, das jeder Zielpaketfehlerrate $PER_{tg}(i)$ entspricht, dergestalt ist, dass der Signal-Geräusch-plus-Störungs-Abstand $SINR^m(i) \leq P^m(i) \cdot \gamma$, wobei $P^m(i)$ die für die Übertragung $i$ erforderliche Sendeleistung und $\gamma$ ein Indikator für die Qualität des Ausbreitungskanals ist.

3. Verfahren nach Anspruch 1, bei dem zwei Pakete, die aus zwei aufeinander folgenden Übertragungen $i, i + 1$ stammen, kombiniert werden und bei dem die Auswahl (S) des Modulations- und Codierungsschemas $m$, das jeder Zielpaketfehlerrate $PER_{tg}(i)$ entspricht, dergestalt ist, dass der Signal-Geräusch-plus-Störungs-Abstand und die für die Übertragung $i$ erforderliche Sendeleistung $P^m(i)$ durch die folgende Beziehung verknüpft sind:

$$\sum_{j=1}^{i} P^m(j)\gamma \geq SINR^m(i),$$ wobei $\gamma$ ein Indikator für die Qualität des Ausbreitungskanals ist.

4. Verfahren nach einem der Ansprüche 2 bis 3, wobei die Übertragungsanzahl $Tr_n > 2$ ist, wobei das Verfahren einen Schritt der Bestimmung (S5) des Indikators für die Qualität des Übertragungskanals vor jeder Übertragung $i > 1$ und einen Schritt der Aktualisierung der Übertragungsanzahl $Tr_n$; der Zielpaketfehlerrate $PER_{tg}(i)$ jeder Übertragung $i$, wobei $i = 2, ..., Tr_n$, um die Restpaketfehlerrate $PER_{res}$ zu erreichen; und des Modulations- und Codierungsschemas $m$, das jeder Zielpaketfehlerrate $PER_{tg}(i)$ entspricht, umfasst.

5. Verfahren nach einem der Ansprüche 1 bis 3, wobei die Zielpaketfehlerrate der Übertragung $i = 1$ größer ist als die Zielpaketfehlerrate der Übertragung $i > 1$.

7

**6.** Verfahren nach einem der Ansprüche 1 bis 4, wobei der Indikator für die Qualität des Ausbreitungskanals der standardisierte Signal-Geräusch-plus-Störungs-Abstand ist, der einer Übertragung von Pilotsymbolen über die Übertragungseinrichtung entspricht.

**7.** Verfahren nach einem der Ansprüche 1 bis 5, wobei die Zielpaketfehlerrate $PER_{tg}$ =[ $PER_{tg}$ (1), ..., $PER_{tg}$ (i),.... $PER_{tg}$ ($Tr_n$)] die folgende Bedingung verifiziert: $PER_{tg}$ (i) > $PER_{tg}$ (i+1) >...> $PER_{tg}$ ($Tr_n$).

**8.** Verfahren nach einem der Ansprüche 1 bis 6, wobei die Zielpaketfehlerrate $PER_{tg}$ (i) bei jeder Übertragung i dergestalt ist, dass $PER_{res} \leq \prod_{i=1}^{Tr_n} PER_{tg}(i)$.

**9.** Verfahren nach einem der vorhergehenden Ansprüche, wobei die Übertragungsanzahl $Tr_n$ und die Zielpaketfehlerrate $PER_{tg}$ (i) bei jeder Übertragung i die Sendeleistung $P_{avg}$ des Datenpakets, die durch die folgende Funktion

$$P_{avg} = \sum_{i=1}^{Tr_n} \left\{ P^m(i) \prod_{k=0}^{i-1} PER_{tg}^m(k) \right\}$$ definiert ist, nach einem Modulations- und Codierungsschema m, das der Zielpaketfehlerrate $PER_{tg}$ (i) entspricht, minimiert.

**10.** Verfahren nach einem der vorhergehenden Ansprüche, wobei die Restpaketfehlerrate $PER_{res}$ kleiner als $10^{-4}$ ist.

**11.** Verfahren nach einem der vorhergehenden Ansprüche, wobei das Telekommunikationssystem ein OFDM-System mit Frequenzvielfachzugriff ist, wobei jede Einrichtung ein Frequenzintervall ist.

**Claims**

**1.** Data packet transmission process in a communication system comprising at least one terminal (UE) communicating with a base station (BS), the process comprising at least one transmission (S4) of the data packet with a given power, from the terminal to the base station based on a HARQ scheme to obtain a residual packet error rate $PER_{res}$ after a number of transmissions $Tr_n$, the process being **characterised in that** it comprises a step (S) for the joint selection of the following parameters:

- the number of transmissions $Tr_n$;
- the target packet error rate PER$_{tg}$(i) of each transmission i, where i = 1,...,$Tr_n$, to arrive at the residual packet error rate $PER_{res}$; and
- the modulation and coding scheme m corresponding to each target packet error rate $PER_{tg}$(i) so as to minimise the data packet transmission power.

**2.** Process according to claim 1 wherein the data packet is transmitted on a transmission resource and wherein the selection (S) of the modulation and coding scheme m corresponding to each target packet error rate $PER_{tg}$(i) is such that the signal-to-interference-plus-noise ratio $SINR^m(i) \leq P^m(i) \cdot \gamma$ where $P^m(i)$ is the transmission power required for the transmission i and $\gamma$ is an indicator of the propagation channel quality.

**3.** Process according to claim 1 wherein two packets from two successive transmissions i, i+1 are combined and wherein the selection (S) of the modulation and coding scheme m corresponding to each target packet error rate $PER_{tg}$(i) is such that the transmission signal-to-interference-plus-noise ratio and the power $P^m(i)$ required for the transmission

i are linked by the following equation $\sum_{j=1}^{i} P^m(j) \gamma \geq SINR^m(i)$ where $\gamma$ is an indicator of the propagation channel quality.

**4.** Process according to any of claims 2 to 3 wherein the number of transmissions $Tr_n$ > 2, the process comprising a step (S5) for determining the transmission channel quality indicator before each transmission i > 1 and a step for updating the number of transmissions $Tr_n$; the target packet error rate $PER_{tg}$(i) of each transmission i, where i = 2,...,$Tr_n$, to arrive at the residual packet error rate PER$_{res}$; and the modulation and coding scheme m corresponding to each target packet error rate $PER_{tg}$(i).

5. Process according to any of claims 1 to 3 wherein the target packet error rate of the transmission $i = 1$ is greater than the target packet error rate of the transmission $i > 1$.

6. Process according to any of claims 1 to 4 wherein the propagation channel quality indicator is the standardised signal-to-interference-plus-noise ratio corresponding to a transmission of pilot symbols on the transmission resource.

7. Process according to any of claims 1 to 5 wherein the target packet error rate $PER_{tg} = [PER_{tg}(1), \ldots, PER_{tg}(i), \ldots, PER_{tg}(Tr_n)]$ satisfies the following constraint: $PER_{tg}(i)PER_{tg}(i+1) > \ldots > PER_{tg}(Tr_n)$.

8. Process according to any of claims 1 to 6 wherein the target packet error rate $PER_{tg}(i)$ at each transmission $i$ is such that $PER_{res} \leq \prod_{i=1}^{Tr_n} PER_{tg}(i)$.

9. Process according to any of the above claims wherein the number of transmissions $Tr_n$ and the target packet error rate $PER_{tg}(i)$ at each transmission $i$ minimises the data packet transmission power $P_{avg}$ defined by the following function $P_{avg} = \sum_{i=1}^{Tr_n} \left\{ P^m(i) \prod_{k=0}^{i-1} PER_{tg}^m(k) \right\}$ based on a modulation and coding scheme $m$ corresponding to the target packet error rate $PER_{tg}(i)$.

10. Process according to the any of the above claims wherein the residual packet error rate $PER_{res}$ is less than $10^{-4}$.

11. Process according to any of the above claims wherein the telecommunication system is a frequency-division multiple-access OFDM system, each resource being a frequency interval.

**FIG. 1**

**FIG. 2**

**FIG. 3**

## FIG. 4

| m | Modulation | Codage | Efficacité spectrale (bits/sec/Hz) | Taille paquets (bits) |
|---|---|---|---|---|
| 1 | QPSK | 1/3 | 2/3 | 96 |
| 2 | QPSK | 1/2 | 1 | 144 |
| 3 | QPSK | 2/3 | 4/3 | 192 |
| 4 | 16-QAM | 1/3 | 4/3 | 192 |
| 5 | QPSK | 3/4 | 3/2 | 216 |
| 6 | 16-QAM | 1/2 | 2 | 288 |
| 7 | 64-QAM | 1/3 | 2 | 288 |
| 8 | 16-QAM | 2/3 | 8/3 | 384 |
| 9 | 16-QAM | 3/4 | 3 | 432 |
| 10 | 64-QAM | 1/2 | 3 | 432 |
| 11 | 64-QAM | 2/3 | 4 | 576 |
| 12 | 64-QAM | 3/4 | 9/2 | 648 |

## FIG. 5a

```
┌──────────┐
│    S₁    │
└──────────┘
     │
     ▼
┌──────────┐
│    S₂    │
└──────────┘
     │
     ▼
┌──────────┐
│    S₃    │
└──────────┘
```

## FIG. 5b

```
┌──────────┐        ┌──────────┐
│    S₁    │        │   S₂₃    │
└──────────┘        └──────────┘
     │                   │
     ▼                   ▼
┌──────────┐        ┌──────────┐
│    S₂    │        │   S₂₄    │
└──────────┘        └──────────┘
     │                   │
     ▼                   ▼
┌──────────┐        ┌──────────┐
│   S₂₁    │        │    S₃    │
└──────────┘        └──────────┘
     │                   │
     ▼                   ▼
┌──────────┐
│   S₂₂    │
└──────────┘
```

## FIG. 5c

```
┌──────────┐
│    S     │
└──────────┘
     │
     ▼
┌──────────┐        ┌──────────┐
│    S₄    │        │  i=i+1   │
└──────────┘        └──────────┘
     │                   │
     ▼                   │
  ◇ i=Trn ? ◇──N── ┌──────────┐
     │             │    S₅    │
     O             └──────────┘
     ▼
 ( FIN )
```

## FIG. 5d

```
┌──────────┐
│    S     │
└──────────┘
     │
     ▼
┌──────────┐        ┌──────────┐
│    S₄    │        │  i=i+1   │
└──────────┘        └──────────┘
     │
     ▼
  ◇ i=Trn ? ◇──N──
     │
     O
     ▼
 ( FIN )
```

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• EP 1924018 A

**Littérature non-brevet citée dans la description**

• **A.J. GOLDSMITH ; S. CHUA.** Adaptive coded modulation for fading channels. *IEEE Trans. On Communications,* 1998

• Performance evaluation of some hybrid ARQ schemes in IEEE 802.11a. **E. CALVANESE STRINATI et al.** Proceedings of the IEEE Vehicular Technology Conference. Spring, Avril 2003, vol. 4, 2735-2739